# EUROPÄISCHE PATENTSCHRIFT

(11) **EP 0 489 942 B1**
(45) Veröffentlichungstag und Bekanntmachung des Hinweises auf die Patenterteilung: **25.10.1995**
(21) Anmeldenummer: 90123584.6
(22) Anmeldetag: 07.12.1990
(51) Int. Cl.: H02P 7/62

(54) **Anordnung zur Nutzbremsung elektronisch drehzahlgeregelter Drehstrommotoren**
Device for regenerative braking of an electronic speed controlled ac motor
Appareil pour freinage à récupération d'un moteur à courant alternatif commandé électronique à vitesse

(43) Veröffentlichungstag der Anmeldung: 17.06.1992
(73) Patentinhaber: Krause, Siegfried, Dipl.-Ing., D-44137 Dortmund (DE)
(72) Erfinder: Fröhlich, Günter, W-5828 Enneptal (DE)
(74) Vertreter: Zeitler, Giselher, Dipl.-Ing.

(56) Entgegenhaltungen:
- EP-A- 0 314 801

## Beschreibung

Die Erfindung betrifft eine Anordnung zur Nutzbremsung elektronisch drehzahlgeregelter Drehstrommotoren gemäß dem Oberbegriff des Anspruchs 1.

Zur Drehzahlregelung von Drehstrommotoren werden elektronische Frequenzumformer eingesetzt, welche die Netzanschlußfrequenz von 50 Hz in einen stufenlos stellbaren Bereich von 0 bis 100 Hz umsetzen, um so angeschlossene Drehstrommotore, deren Drehzahl bekanntlich frequenzabhängig ist, optimal auf den Drehzahlbedarf der durch diese Motore angetriebenen Maschinen einzustellen. Bei der Abbremsung einer der angetriebenen Maschinen, z.B. bei einer abzubremsenden Zentrifuge oder bei einer abzusenkenden Last eines Hubgerätes, tritt ein generatorischer Energiefluß auf. Als elektrische Nutzbremsung wird nun ein solcher Vorgang bezeichnet, bei dem im Abbremsvorgang elektrische Energie, also ein generatorischer Energiefluß, erzeugt wird und diese Energie unmittelbar in ein elektrisches Netz hinein geliefert wird.

Bei einem Frequenzumformer wird allgemein der Drehstrom mit einem normalen Brückengleichrichter zunächst gleichgerichtet, in einem Kondensator geglättet und mit einem nachgeschalteten Wechselrichter in die Gebrauchsfrequenz umgesetzt. Läuft nun dieser Motor als Generator, so wird seine Rückleistung vom Gleichrichter aufgehalten, und es tritt lediglich eine Energieabgabe in den Glättungskondensator auf, der innerhalb von Bruchteilen von Sekunden seine Spannung gefährlich ansteigen läßt. Dieser Spannungsanstieg wurde bisher für verlustbehaftetes Bremsen verwendet, indem bei etwa 5 bis 10 % Spannungshub eine Thyristor-Widerstandskombination aktiviert wird, durch welche die im Kondensator anlaufende Energie im Widerstand vernichtet wird.

Eine Nutzbremsung, wie sie bei Großleistungen am Einphasennetz der Eisenbahn bekannt ist, läßt sich bei kleineren Leistungen bis ca. 100 kW wirtschaftlich nicht realisieren und wird bei Verwendung von Thyristoren und der bisher notwendigen umfangreichen Elektronik teuer. Schließlich ist der enge Zusammenbau einer Nutzbremsanlage mit der elektronisch ohnehin sehr aufwendigen Frequenzumformeranlage durch gegenseitige Störung sehr ausfallträchtig.

Die rückzuliefernde elektrische Energie wird bei den bekannten spannungsgeregelten Frequenzumformern zunächst von dem mit beliebiger gerader Drehzahl laufenden Motor bei generatorischem Betrieb in einen Zwischenkreis überführt. Dieser Zwischenkreis besteht aus einem Kondensator, der allerdings trotz Verwendung hoher Kapazitäten nur äußerst wenig Gleichstromladung gespeichert bekommen darf, wenn seine Spannung nicht unzulässig steigen soll. Ein Energierückfluß, der die höchstmögliche Generatorleistung des Motors darstellt, würde den Kondensator und damit auch die Motorspannung in ca. 1/10 Sekunde auf die doppelte Spannung anheben. Selbst dann, wenn Kondensator und Elektronik dies vertragen würden, setzt der Motor aufgrund der doppelten Spannung die ganze rückzuliefernde Energie in Wärme um und geht dabei defekt.

Bei der Zurückführung der Energie in Wechselstromnetzen bleibt während einer Periode von 360° nur ein Bereich von 60°, in dem die Wechselstromamplitude geeignet ist, mit dem einspeisenden Netz verbunden zu werden. Der Steuerung des Zuschaltens innerhalb +/- 30° vom Amplitudenmaximalwert kommt somit eine entscheidende Bedeutung zu. Besteht die Möglichkeit außerdem, die negative Halbwelle, also innerhalb von +/- 30° des Maximalwertes der negativen Halbwelle, auszunützen, können 1/3 der gesamten Periodendauer für den Rückfluß genutzt werden.

Aus EP 0 314 801 A1 ist eine Schaltung bekannt zur Stromrückspeisung aus der Nutzbremsung eines Asynchronmotors, der einerseits den Stromrückfluß in die Drehstromwechselrichterstufe mittels einer Widerstands-/Diodenschaltung begrenzt und andererseits die Anpassung der Netzfrequenz des rückgespeisten Drehstroms an die Frequenz des Drehstromnetzes ermöglicht. Auch sind mit Thyristoren arbeitende Nutzbremsgeräte sowie deren teilweise recht aufwendige Ansteuerung bekannt.

Allen diesen bekannten Geraten ist gemeinsam, daß in der letzten Ansteuerstufe der Steuerimpulsverstärkung verhältnismäßig hohe Steuerleistungen nötig sind, die vor allem aus Kippstufen gewonnen werden. Hiermit verbunden sind Funkstörungen bis in den MHz-Bereich, andererseits sind sie empfindlich auf stärkere Fremdeinwirkung etwa der gleichen Störfrequenzen, die ein unbeabsichtigtes Kippen einer Steuerstufe auch bei bester Abschirmung ermöglichen. Insbesondere sind dies, wegen des engen Aneinanderbauens von Frequenzumformer und Nutzbremsgerät, induktive Störspannungsübertragungen vom Frequenzumformer auf das Nutzbremsgerät, da hier auf kürzeste Entfernung ein kaum übersehbares Spektrum von Störfrequenzen erheblichen Einflusses arbeitet. Ein nur eine Mikrosekunde lang wirkender Störimpuls von etwa 1 Milliwattsekunde Energieinhalt schaltet irgendwann eine Impulsstufe doch einmal innerhalb von Stunden oder Tagen durch und bedeutet im geringsten Falle einen Betriebsausfall.

Aus der Druckschrift ETZ Band 110, 1989, Heft 10, Seite 465 ist der Einsatz von IGBT-Modulen in der Antriebstechnik bekannt, wobei hier jedoch gemäß Seite 466 die Ansteuerung mittels aufwendiger Mikrorechner erfolgt.

Der Erfindung liegt daher die Aufgabe zugrunde, das Nutzbremsgerät der gattungsgemäßen Art derart weiterzubilden, daß es mit geringem Aufwand und störunanfällig die sichere Energierückführung auch während der negativen Halbwelle der Wechselspannung ermöglicht.

Die Lösung dieser Aufgabe wird durch die im kennzeichnenden Teil des Patentanspruches 1 aufgeführten Merkmale erzielt. Weitere Ausgestaltungen der Erfindung sind in den Unteransprüchen beschrieben.

Der Erfindung liegt der Gedanke zugrunde, in der Steuerung keine Impuls-Kippstufen zu verwenden und mit Hilfe von Transistorschaltungen eine fast leistungslose Ansteuerung für den Stromdurchgang zu schaffen, wobei ein Großteil der Steuersignalbereitung auf "magnetische Art" zustande kommt. Es soll dabei ein dauerndes "Überlaufen" erzielt werden, d.h. die ansteigende Kondensatorspannung soll unverzüglich ins Netz eingespeist werden.

Die Erfindung wird im folgenden anhand der Zeichnung näher beschrieben. Es zeigen:
- Fig. 1: eine Anordnung zur Steuerung eines Wechselstromes mittels einer Gleichspannung;
- Fig. 2: den Verlauf des Wechselstromes bei vier verschiedenen Steuerspannungen;
- Fig. 3: die Verläufe der beiden Teilwechselströme bei vier verschiedenen Steuerspannungen gemäß Fig. 2;
- Fig. 4: eine Anordnung zur Umwandlung der Teilströme gemäß Fig. 3 in rechteckförmige Signale zur Steuerung der Leistungstransistoren;
- Fig. 5: den Verlauf des Wechselstromes I_{w1}, der zur Steuerung der Umwandlung in eine fast rechteckige Ausgangsspannung U₁, U₂ dient;
- Fig. 6: die erforderlichen Stromverläufe in der Anordnung nach Fig. 4;
- Fig. 7: eine Anordnung zur Gewinnung der Wechselsteuerspannung mit 30° Verschiebung;
- Fig. 8: das Winkelverstellungsdiagramm mit einer Addition von 1V und +/- 120°;
- Fig. 9: eine Anordnung zur Gleichspannungssteuerung für die Brückenschaltungen auf konstante Spannung mit Nachführung der Netzspannungsschwankungen und
- Fig.10: eine Gesamtanordnung in praxisgerechter Ausführung, dargestellt zur Ansteuerung der in Phase R liegenden Leistungstransistoren.

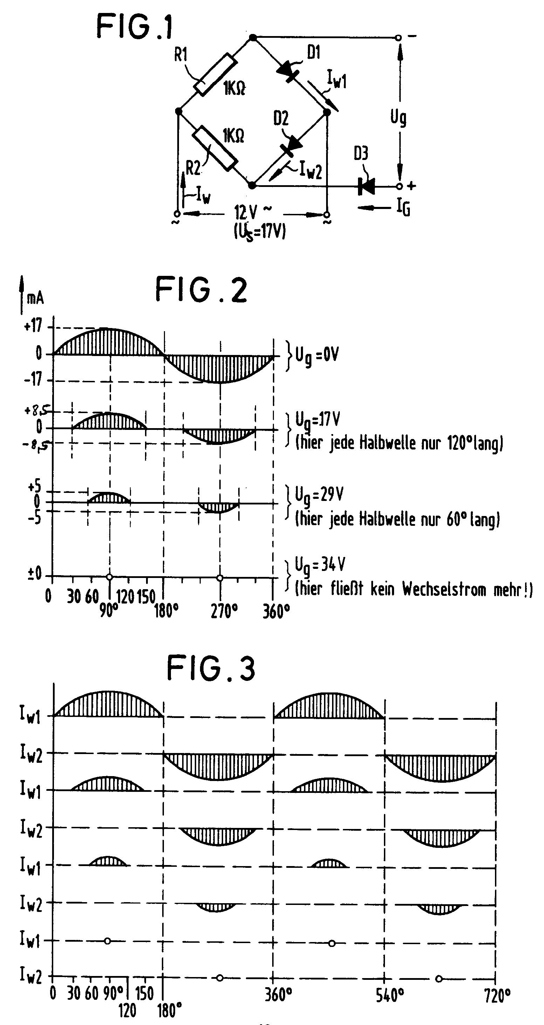

Werden gemäß Fig. 1 an die waagerechten Eingänge einer Brückenschaltung R1, R2, D1, D2 als Beispiel eine Steuerwechselspannung Uₛ von 12 V angelegt, so fließt der positive Halbwellenstrom I_{w1} über den Widerstand R1 und die Diode D1, während der negative Halbwellenstrom I_{w2} über den Widerstand R2 und die Diode D2 fließt. An den senkrechten Anschlüssen der Brückenschaltung, den Gleichspannungsanschlüssen, tritt keine Wechselspannung auf, denn wenn gerade die 12 V Wechselspannung mit Pluspolarität am linken Anschluß liegt, sperrt die Diode D3 einen sonst möglichen Brückenquerstrom. Liegt dagegen die Minuspolarität des Wechselstromes Uₛ am linken Anschluß, sperrt die Diode D3 ebenfalls. Da sich also die beiden Gleichspannungsanschlüsse stets spannungslos verhalten, kann man einen vom Wechselstrom unbeeinflußten Gleichstrom über den Querzweig einspeisen. Es ist somit nur eine einseitige Beeinflussung der beiden überlagerten Ströme möglich, nämlich vom Gleichstromkreis zum Wechselstromkreis, aber nicht umgekehrt. Diese Anordnung gleicht im Prinzip etwas einem mit vier Dioden bestückten Ringmodulator, ist aber wegen seiner Dioden-Widerstandskombination funktionell anders. In der weiteren Erläuterung wird aber der Einfachheit halber diese Anordnung als sog. Ringmodulator bezeichnet. Wird nun eine Steuergleichspannung U_{g}, ansteigend z.B. von 0 bis 34 V, an die Schaltung gemäß Fig. 1 angelegt, so verändert sich der fließende Gesamtwechselstrom I_{w} auf sehr charakteristische Weise, wie Fig. 2 zeigt. Vorausgesetzt sei hierbei, daß die Dioden D1, D2 und D3 in Durchlaßrichtung keinen Spannungsabfall haben, was natürlich nur theoretisch angenommen werden soll. Die 12 V Wechselspannung haben einen Spitzenwert von 12 V x 1,41, also ca. 17 V. Ist U_{g} = 0, dann ist I_{w} wegen der 1 kOhm Widerstände 17 mA und fließt in Vollwellenform (erste Kurve von Fig. 2). Ist U_{g} gleich 17 V (8,5 V je Zweig), dann ist ein Stromfluß von I_{w1} und I_{w2} nur oberhalb des Sinusanstieges von 8,5 V möglich, d.h. die durchgelassenen Stromanteile sind nur 120° lang statt 180° der Vollwelle. I_{w} entspricht dann der zweiten Kurve von Fig. 2. Mit weiter steigender Steuergleichspannung U_{G} werden die durchgelassenen Teile immer schmäler, jedoch bleiben sie symmetrisch zu 90° und 270°, bis sie bei 34 V ganz verschwinden. Die hierbei sinkende Spannung ist für den vorgesehenen Steuerungszweck unwichtig, entscheidend ist, in welchem Winkelbereich überhaupt eine Spannung vorhanden ist.

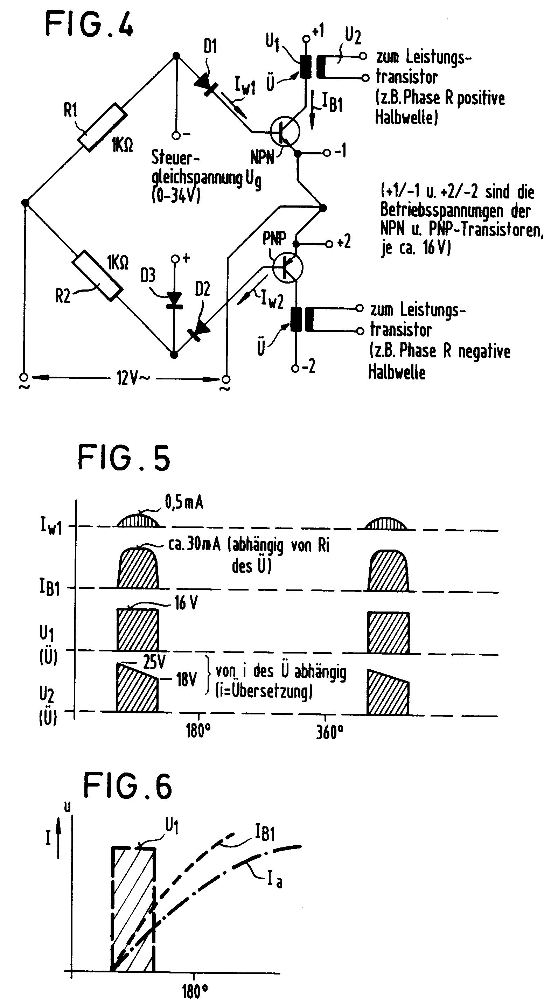

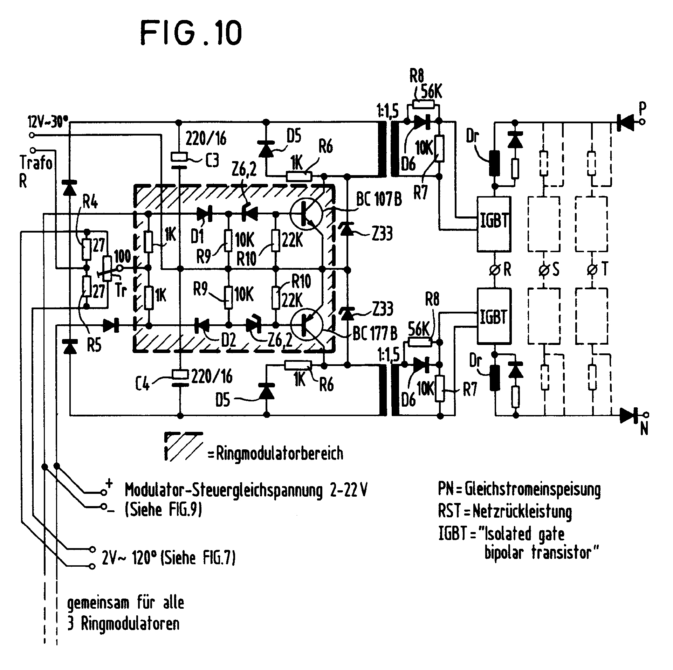

Da die beiden Teilwechselströme I_{w1} und I_{w2} den Gesamtwechselstrom I_{w} in positive und negative Teile auftrennen, ergeben sich die für verschiedene Steuergleichspannungen gezeichneten Stromkurven nach Fig. 3. Diese getrennten Verläufe von I_{w1} und I_{w2} sind letztendlich das angestrebte Ziel des sog. Ringmodulators nach Fig. 1, wodurch dann bei Verwendung von nur drei dieser sog. Ringmodulatoren die sechs erforderlichen Signale für die Leistungstransistoren (IGBT, Fig. 10) erzeugt werden können. Die flachen, nicht für exakte Signale zur Leistungstransistorsteuerung geeigneten Spannungsteile gemäß Fig. 3 müssen jedoch aufbereitet werden. Zu diesem Zweck ist gemäß Fig. 4 in Reihe mit D1 die Basis-Emitter-Strecke eines einfachen NPN-Transistors gelegt, sinngemäß in Reihe mit D2 dann ein PNP-Transistor. Die Kollektoren dieser Transistoren sind über die Eingangswicklung eines Übertragers Ü an die entsprechende positive oder negative Betriebsspannung gelegt, deren Erzeugung ebenfalls aus Fig. 10 hervorgeht. Der Übertrager hat drei Funktionen:
1. die galvanische Trennung von der hohen Spannung der Leistungsendstufe,
2. die "magnetische" Umwandlung der sog. Ringmodulatorsteuerspannungen (Fig. 3) in rechteckige Signale und
3. die richtige Anpassung der Ausgangssignalspannungen.

Fig. 5 und Fig. 6 zeigen die Aufbereitung der Steuerspannungen in rechteckige Signale, ohne auf Kippstufen wie Schmitt-Trigger o.ä. zurückgreifen zu müssen, die ja bei starken Störimpulsen durchschalten und eine Fehlschaltung im Leistungsteil hervorrufen könnten. Die kleinen Steuertransistoren NPN bzw. PNP arbeiten überwiegend im Sättigungsbetrieb, damit auch der Anfangs- und Endbereich von den Teilwechselströmen (z.B. I_{w1}, Fig. 5) möglichst schnell ansteigt, wie es Kurve I_{B1} in Fig. 5 zeigt.

Im Übertrager Ü wird dann die Umformung in ein ausreichend scharfes Rechtecksignal vorgenommen. Dies erfolgt dadurch, daß, wie Fig. 6 zeigt, I_{B1} schneller ansteigt als der natürliche Stromanstieg des Übertragers bei sprunghaftem Anschluß an die Betriebsspannung von hier z.B. 16 V. Damit wird u1 rechteckförmig und u2 ebenso bis auf eine kleine efunktionelle Dachschräge. Damit dieser Vorgang erreicht wird, muß der Übertrager Ü eine Mindestgröße aufweisen, die hier bei 50 Signalen/Sekunde und bei einem zuzulassenden Dachschrägenabfall von 33 % bei einer Übertragungsgröße EI38 (Normblech Dyn.IV) liegt, also einen noch recht kleinen Übertrager. Bei sehr schmalen Signalen würden diese verrundet werden; da jedoch, hier nicht näher erklärt, wegen der um 30° versetzten Steuerwechselspannungen die Steuerung des Leistungssatzes im Winkelbereich von 30° bis 60°und natürlich symmetrisch hierzu im Bereich von 120° bis 150° erfolgt, sind die verwendeten Signale nie verrundet.

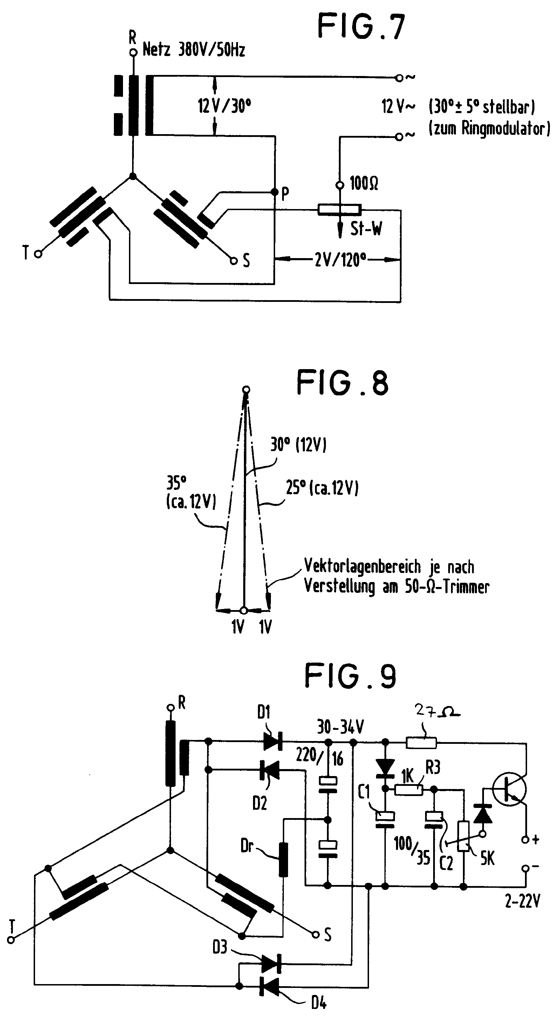

Fig. 7 zeigt die winkelrichtige Erzeugung der 12 V Wechselsteuerspannung. So muß die Winkellage dieser Spannung genau 30° von der Winkellage der Leiter-Netzspannung R-S abweichen. Dies geschieht durch drei kleine in Stern geschaltete Trafos von ca. 5 W Typenleistung. Um die kleinen Winkelfehler innerhalb der Trafos auszugleichen, werden mittels kleiner Zusatzspannungen um 120° gegenüber der Leiterspannung versetzte (90° gegenüber den 12 V) Hilfsspannungen, zweimal je ca. 1 V, zugeschaltet Diese sind mittels eines Stellwiderstandes St-W stufenlos einstellbar und gestatten eine Verstellung der resultierenden 12 V-Spannung um ca. +/- 5 Winkelgrade. Wichtig ist hierbei, daß die Gesamtspannung 12 V trotz des Zuschaltens dieser Hilfsspannungen praktisch unveränderlich bleibt, was durch die 90° Winkeldifferenz zwischen den 12 V und den 2 x 1 V gewährleistet ist. In Fig. 7 ist nur eine Anordnung einer Phase gezeichnet.

Fig. 8 zeigt im Vektordiagramm noch einmal die bleibende Spannungshöhe der 12 V, wenn der Spannungspfeil um die +/-5° verstellt wird. Durch die "magnetische" Erzeugung der drei 12-V-Steuerwechselspannungen im Verein mit den Stabilisierungswicklungen (Fig. 9) werden Winkelabweichungen des Netzes mitgeführt, wodurch stets die gegenüber den Netzspannungen richtige Lage der 12-V-Steuerwechselspannungen erhalten bleibt.

Fig. 9 zeigt die Gleichspannungssteuerung für die im sog. Ringmodulator eingespeisten Steuerwechselspannungen. Den drei in Dreieck geschalteten Stabilisierungswicklungen ist eine Drehstromverdopplergleichrichteranordnung mit den Dioden D1, D2, D3, D4 nachgeschaltet. Es reicht nun statt der eigentlichen 34 V ein Spannungsbereich von 2 - 22 V zur Ansteuerung aus, was aus der noch zu erklärenden praktischen Schaltungsausführung nach Fig. 10 hervorgeht. Diese Gleichspannung muß drei Bedingungen erfüllen:
1. sie muß stellbar sein und die eingestellte Spannung "in sich" konstant halten,
2. diese Spannung muß total oberwellenfrei sein und
3. sie muß, obwohl "in sich konstant", Netzspannungsveränderung sofort im gleichen Sinne mitmachen.

Natürlich muß sie aktiv und passiv vollständig störunanfällig sein, denn es wird hier ein Transistor verwendet. Die Schaltung soll möglichst wenig aktive Bauelemente haben. Die totale Oberwellenfreiheit wird durch die entkoppelte Siebanordnung der beiden 100 MF-Kondensatoren C1, C2 und dem 1 k-Ohm Widerstand R3 erreicht, wobei wegen der nun äußerst geringen Kapazitäten (auch der beiden 220 MF-Ladekapazitäten) eine geringe Zeitkonstante von nur 0,5 Sekunden erzielt ist, die kurz genug zum Erfassen von Netzspannungsänderungen ist. Die Schaltung ist, wie ersichtlich, trotz der vielen Bedingungen ungewöhnlich einfach und frei von den sonst bei Spannungskonstanthaltern und -stellern üblichen, oft nur schwierig zu beseitigenden Schwingneigungen. Eine Drossel Dr verhindert rückwirkende Kommutierungsimpulse der 4 Gleichrichterdioden D1, D2, D3 und D4 in die Trafos und Übertreten in die 12 V-Wechselsteuerspannungen. Denn trotz der geringen Gleichstromleistung von etwa 1 W (die Trafos haben zusammen 15 W) würden die Kommutierungsimpulse die in den sog. Ringmodulatoren modulierten Wechselspannungen beim Ein- oder Aussetzen bei bestimmten Aussteuerungswinkeln mit einem kurzen Vor- oder Nachschlag schalten. Das wäre zwar im Leistungsteil ungefährlich, würde aber dem Netz einen überflüssigen unerwünschten Oberwellenanteil in der rückgelieferten Leistung zuführen.

In Fig. 10 ist ein praktisch ausgeführter sog. Ringmodulator, von dem insgesamt drei erforderlich sind, dargestellt. Im schraffierten eigentlichen Modulatorteil erkennt man noch einige Bauteile mehr, die in Fig. 4 nicht gezeigt sind. Die Widerstände R9 und R10 von 10 k-Ohm und 22 k-Ohm dienen dazu, Leckströme im mA-Bereich und evtl. eingestrahlte Antennenströme von Funkstörungen gleichen Strombereiches am Eintritt in die Transistoren zu hindern. Dies ist eine zusätzliche Sicherheit, denn die nachgeschalteten Übertrager könnten diese schnellen Störungen ohnehin kaum übersetzen. Die Zenerdioden Z6,2 ergänzen die Durchlaßwerte von je 0,7 V der Diode D1 und 0,7 V der Diode D2 auf 7,6 V. Das ist ungefähr die Hälfte der 17 V Spitzenamplitude der zu steuernden 12 V-Wechselspannung. Somit verhält sich die sog. Ringmodulatorbrücke auch bei fehlender Steuergleichspannung so, als wenn schon die halbe Spannung der 34 V Gleichspannung vorhanden ist. Da Sinus 30° = 0,5 ist, wird einerseits eine schon bei fehlender Gleichspannung fast richtige Ansteuerung erzielt, nämlich zwischen 30° und 150°, wie weiter oben bereits erwähnt wurde. Andererseits wird eine weitere Störsicherheit erzielt, denn Störimpulse müssen erst einmal diese Hürde von 7,6 V überspringen.

Die Stromversorgung der beiden Transistoren erfolgt, da nur ca. 50 Milliwatt je Transistor nötig sind, aus der 12 V Steuerwechselspannung, die von diesen geringen Kommutierungsleistungen nicht gestört wird. Die Steuerwechselspannung erhält die 2 V, 120° über die Kombination von Widerstand R4, R5 von 2 x 27 Ohm und Trimmer TR von 100 Ohm zugeführt. Die parallel zur Eingangswicklung der Übertrager liegende, aus Diode D5 und Widerstand R6 bestehende Anordnung begrenzt Spannungsspitzen vom Übertrager, etwa auf das Dreifache der 16 V Betriebsgleichspannung der Ladekondensatoren C3, C4 von 220 MF. Diese Spannungsspitze kann betriebsmäßig nicht auftreten, lediglich beim Abschalten des Gerätes vom Netz. Die Transistoren BC 107 B und BC 177 B haben eine zulässige Spitzenspannung von 50 V. Als weitere Sicherheit ist parallel zu den Emitter-Kollektorstrecken der Transistoren eine Zenerdiode Z33 geschaltet. Dadurch können ohnehin nur Spitzen bis 33 V, also völlig ungefährlich für die Transistoren, auftreten. Im Gegensatz zur separaten Steuerwechselspannungsversorgung der drei sog. Ringmodulatoren ist die Modulator-Steuergleichspannung galvanisch mit allen drei Modulatoren verbunden, jedenfalls mit der Minusleitung, während die Plusleitung jeweils über eine Sperrdiode eingeleitet wird. Diese Diode wird hier doppelt genutzt, denn es ist gleichzeitig die Diode D3 in Fig. 1 für die beschriebene Sperrung von Rückwirkungen des Steuerwechselstromes. Die Übertragerausgänge sind über eine Diode D6 an die Feldeffekteingangstransistoren der Darlington-Kombination IGBT angeschlossen. Da die leistungslosen Eingänge der Feldeffekttransistoren jedoch eine Kapazität von ca. 10.000 pF haben, muß nach Beendigung des Steuersignals dieser Kondensator entladen werden, was durch den 10 k-Ohm Widerstand R7 innerhalb von 0,1 Millisekunden erfolgt. Da hierbei die Signalspannung nur auf 33 % gefallen ist, wird die nun bereits vorhandene entgegengesetzte Signalspannung vom Übertrager über den Bypass-Neutralisationswiderstand R8 von 56 k-Ohm dazu verwendet, einen steileren Abfall der Signalspannung zu erzielen. Es gelingt damit, den Auf-Zu-Zustand der Leistungstransistorenanordnung IGBT, der bei + 7 V bzw. bei + 2 V liegt, innerhalb von 0,05 Millisekunden zu durchlaufen. Dies entspricht einer scheinbaren Schaltfrequenz von 5 bis 10 kHz, so daß keine Funkstörung auftritt. Tiefere, Netzoberwellen erzeugende Frequenzen werden durch die sowieso nötigen vorgeschalteten Drosseln zwischen Gleichstromeinspeisung P-N und den als Wechselrichter arbeitenden Leistungstransistorenschaltungen IGBT weigehend gedämpft, so daß die als Nutzbremsung ins Netz zurückgeführte Leistung dieses nicht zusätzlich verseucht. Die parallel zu den Drosseln angedeuteten Widerstands-Dioden-Kombinationen sind erforderlich, um die magnetisch gespeicherte Energie in den Drosseln zu vernichten, damit hiervon keine Überspannungen die Transistorenanordnung zerstören können. Der Rücklieferungs-Wirkungsgrad liegt, bei Verlusten von 2 % in den Leistungstransistorenschaltungen und 1,5 % in den Drossel-Dioden-Widerstands-Kombinationen, immerhin bei 96,5 %.

## Patentansprüche

1. Anordnung zur in das öffentliche Drehstromnetz erfolgenden Rückspeisung von als Gleichstrom in einem Zwischenspeicher verfügbarer elektrischer Energie aus der Nutzbremsung elektronisch drehzahlgeregelter Drehstrommotoren,
**dadurch gekennzeichnet,**
daß drei Brückenschaltungen jeweils einen in einer geeigneten Winkellage liegenden Steuerwechselstrom führen, der von einem von ihm unbeeinflußten queren Steuergleichstrom (Ug) derart moduliert ist, daß die ausgehenden Steuerwechselstromhalbwellen symmetrisch gegenüber den eingehenden vollen Halbwellen stufenlos verkürzt werden und nach Verstärkung und Umformung in ein Rechtecksignal zur Ansteuerung eines mit Transistoren bestückten Drehstromwechselrichters geeignet sind.

2. Anordnung nach Anspruch 1, dadurch gekennzeichnet, daß die Brückenschaltungen aus zwei Widerständen (R1, R2) und zwei Dioden (D1, D2) bestehen.

3. Anordnung nach Anspruch 1 oder 2, dadurch gekennzeichnet, daß die Einspeisung des den Wechselstrom steuernden Gleichstromes durch eine dritte Diode (D3) so entkoppelt ist, daß eine Beeinflussung des steuernden Gleichstromes (I_{G}) unmöglich ist.

4. Anordnung nach einem der Ansprüche 1 bis 3, dadurch gekennzeichnet, daß in den Diodenzweigen der Brückenschaltungen einstufige einfache Transistorverstärker (NPN, PNP) angeordnet sind.

5. Anordnung nach einem der Ansprüche 1 bis 4, dadurch gekennzeichnet, daß am Ausgang der Transistoren Übertrager (Ü) zur galvanischen Entkopplung zu dem an Netzspannung liegenden nachgeschalteten Wechselrichter angeordnet sind.

6. Anordnung nach einem der Ansprüche 1 bis 5, dadurch gekennzeichnet, daß in den Brückenschaltungen vom Steuergleichstrom (I_{G}) beeinflußte Wechselstromhalbwellen durch geeignete Übersättigung der Verstärkertransistoren (NPN, PNP) und geeignete Dimensionierung der Übertragertrafos (Ü) bezüglich ihrer Stromanstiegsgeschwindigkeit (di/dt) am Ausgang von diesen rechteckig aufbereitete Steuersignale für den nachgeschalteten Wechselrichter zur Verfügung stehen.

7. Anordnung nach einem der Ansprüche 1 bis 6, dadurch gekennzeichnet, daß die in der Brückenschaltung zu steuernden Wechselströme aus einer Sternschaltung von drei kleinen Trafos zum Erzielen der erforderlichen 30°-Phasenverschiebung gegenüber den Leiternetzspannungen gewonnen werden.

8. Anordnung nach einem der Ansprüche 1 bis 7, dadurch gekennzeichnet, daß die in der Brückenschaltung zu steuernden Wechselströme zusätzlich zu ihrer transformatorisch festgelegten Abweichung von 30° gegenüber den Leiterspannungen des Netzes um +/- 5° verstellbar sind.

9. Anordnung nach einem der Ansprüche 1 bis 8, dadurch gekennzeichnet, daß durch Einstellen eines Stellwiderstandes (St - W) ein geeignetes Spannungsverhältnis der für die +/-5° erforderlichen Wechselspannung zur eigentlich zu steuernden Wechselspannung, die in ihrer Amplitude unverändert bleibt, erzielt wird.

10. Anordnung nach einem der Ansprüche 1 bis 9, dadurch gekennzeichnet, daß die drei in Stern geschalteten Steuertrafos eine weitere Wicklung aufweisen, die zur Stabilisierung der Winkellage der in Sternschaltung betriebenen Steuertrafos im Dreieck geschaltet sind.

11. Anordnung nach einem der Ansprüche 1 bis 10, dadurch gekennzeichnet, daß die steuernde Gleichspannung verstellbar und mittels entkoppelter Siebschaltungen (C1, C2) oberwellenfrei ist und sich bei dem jeweils eingestellten Spannungswert zusätzlich linear abhängig zu eventuellen Netzspannungsschwankungen ändert.

12. Anordnung nach einem der Ansprüche 1 bis 11, dadurch gekennzeichnet, daß in den Diodenzweigen der Brückenschaltungen zusätzlich Zenerdioden (Z6,2) geeigneter Spannung geschaltet sind, um zu große Aussteuerungswinkel des gesteuerten Wechselstromes bei Gleichspannung Null zu vermeiden.

13. Anordnung nach einem der Ansprüche 1 bis 12, dadurch gekennzeichnet, daß die steuernde Gleichspannung alle drei Brückenschaltungen galvanisch verbindet.

14. Anordnung nach einem der Ansprüche 1 bis 13, dadurch gekennzeichnet, daß durch geeignete Beschaltung der Transistoren (NPN, PNP; BC107B, BC177B) mittels Zenerdioden und der Übertragerprimärwicklung mit Widerstands-Diodenkombinationen (D5, R6) eventuell auftretende Spannungsspitzen abgebaut werden und somit die Spannungsfestigkeit der Transistoren nicht überfordert wird.

15. Anordnung nach einem der Ansprüche 1 bis 14, dadurch gekennzeichnet, daß in den Brückenschaltungen angeordnete Ableitwiderstände (R9, R10) Leckströme der Dioden und/oder eingestrahlte Störspannungen unwirksam machen.

16. Anordnung nach einem der Ansprüche 1 bis 15, dadurch gekennzeichnet, daß die Übertragerausgänge Entladewiderstände (R7) für die Eingangskapazitäten der Schalttransistorenanordnung-Eingänge (IGBT) haben sowie einen Bypaßwiderstand (R8) zur Signalgleichrichterdiode (D6) zwecks Ausnutzung des Negativsignals für sichere und schnelle Entladung der Eingangskapazitäten dieser Transistoranordnung nach Signalende aufweisen.

17. Anordnung nach einem der Ansprüche 1 bis 16, dadurch gekennzeichnet, daß zwischen dem speisenden Gleichstromnetz und jeder Transistorschaltung (IGBT) eine Dämpfungsdrossel (Dr) in Reihe zur Drehstromnetzrückeinspeisung liegt und daß eine Beschaltung zur Entladung der magnetischen Drosselenergie vorgesehen ist.

## Claims

1. An arrangement for feeding back, into the public three-phase mains, electrical energy, available as direct current in an intermediate store, from the regenerative braking of electronically speed-regulated three phase motors, characterised in that three bridge circuits in each case conduct a control alternating current in a suitable angular position, which current is modulated by a transverse control direct current (Ug), uninfluenced by the latter, in such manner that the outgoing control alternating current half-waves are steplessly shortened symmetrically with respect to the incoming full half-waves and, following amplification and conversion into a rectangular signal, are suitable for driving a three-phase inverter equipped with transistors.

2. An arrangement according to Claim 1, characterised in that the bridge circuits consist of two resistors (R1, R2) and two diodes (D1, D2).

3. An arrangement according to Claim 1 or 2, characterised in that the feeding in of the direct current which controls the alternating current is decoupled by means of a third diode (D3) in such manner that influencing of the controlling direct current (I_{G}) is impossible.

4. An arrangement according to one of Claims 1 to 3, characterised in that single-stage, simple transistor amplifiers (NPN, PNP) are arranged in the diode arms of the bridge circuits.

5. An arrangement according to one of Claims 1 to 4, characterised in that transformers (Ü) for electrical decoupling to the following inverter connected to mains voltage are arranged at the output of the transistors.

6. An arrangement according to one of Claims 1 to 5, characterised in that in the bridge circuits alternating current half-waves influenced by the control direct current (I_{G}) are available, by means of suitable oversaturation of the amplifier transistors (NPN, PNP) and suitable dimensioning of the transformation transformers (Ü) in respect of their current increase speed (di/dt), at the output of the latter as control signals processed into rectangular form for the following inverter.

7. An arrangement according to one of Claims 1 to 6, characterised in that the alternating currents to be controlled in the bridge circuit are obtained from a star arrangement of three small transformers for the attainment of the required 30° phase shift relative to the mains phase-to-phase voltages.

8. An arrangement according to one of Claims 1 to 7, characterised in that the alternating currents to be controlled in the bridge circuit are adjustable by +/-5° in addition to their transformationally defined deviation of 30° relative to the mains phase-to-phase voltages.

9. An arrangement according to one of Claims 1 to 8, characterised in that by the setting of a variable resistance (St - W), a suitable voltage ratio of the alternating voltage which is required for the +/- 5° to the alternating voltage which is actually to be controlled and which remains unchanged in its amplitude is obtained.

10. An arrangement according to one of Claims 1 to 9, characterised in that the three star-connected control transformers possess a further winding, which windings are connected in delta for the stabilisation of the angular position of the control transformers operated in a star connection.

11. An arrangement according to one of Claims 1 to 10, characterised in that the controlling direct voltage is adjustable and by means of decoupled filter circuits (C1, C2) is harmonic-free and at the respective, set voltage value additionally changes in linear fashion in dependence upon possible mains voltage fluctuations.

12. An arrangement according to one of Claims 1 to 11, characterised in that Zener diodes (Z6, 2) of a suitable voltage are additionally connected in the diode arms of the bridge circuits, in order to avoid excessively large modulation angles of the controlled alternating current in the case of a direct voltage of zero.

13. An arrangement according to one of Claims 1 to 12, characterised in that the controlling direct voltage electrically connects all three bridge circuits.

14. An arrangement according to one of Claims 1 to 13, characterised in that by suitable wiring of the transistors (NPN, PNP; BC107B, BC177B) by means of Zener diodes and of the transformer primary winding with resistor-diode combinations (D5, R6), possibly occurring voltage peaks are broken down and thus the dielectric strength of the transistors is not overcharged.

15. An arrangement according to one of Claims 1 to 14, characterised in that leakage resistors (R9, R10) arranged in the bridge circuits deactivate leakage currents of the diodes and/or received interference voltages.

16. An arrangement according to one of Claims 1 to 15, characterised in that the transformer outputs possess discharge resistors (R7) for the input capacitances of the switching transistor arrangement inputs (IGBT) as well as a by-pass resistor (R8) to the signal rectifier diode (D6) for the purpose of utilizing the negative signal for reliable and rapid discharging of the input capacitances of this transistor arrangement towards the end of the signal.

17. An arrangement according to one of Claims 1 to 16, characterised in that between the supply direct current network and each transistor circuit (IGBT) a damping choke (Dr) is arranged in series with the feedback to the three-phase mains and that a circuit is provided for the discharging of the magnetic choke energy.

## Revendications

1. Agencement pour réinjecter dans le réseau électrique alternatif triphasé une énergie électrique disponible sous la forme de courant continu dans un accumulateur intermédiaire et provenant d'un freinage utilitaire de moteurs à courant triphasé dont la vitesse de rotation est régulée par voie électronique,
caractérisé en ce que trois circuits en pont conduisent respectivement un courant alternatif de commande situé dans une position angulaire appropriée, ce courant étant modulé par un courant continu de commande transversal (Ug) qui n'est pas influencé par le courant alternatif de commande, de telle sorte que les demi-ondes sortantes du courant alternatif de commande sont raccourcies symétriquement et régulièrement par rapport aux demi-ondes pleines entrantes, et conviennent, après amplification et déformation en un signal rectangulaire, au pilotage d'un onduleur à courant triphasé équipé de transistors.

2. Agencement selon la revendication 1, caractérisé en ce que les circuits en pont sont constitués de deux résistances (R1, R2) et de deux diodes (D1, D2).

3. Agencement selon l'une ou l'autre des revendications 1 et 2, caractérisé en ce que l'injection du courant continu qui commande le courant alternatif est découplée au moyen d'une troisième diode (D3) de telle manière qu'une influence du courant continu de commande (I_{G}) est impossible.

4. Agencement selon l'une quelconque des revendications 1 à 3, caractérisé en ce que des amplificateurs à transistors (NPN, PNP) simples à un seul étage sont agencés dans les branches des diodes des circuits en pont.

5. Agencement selon l'une quelconque des revendications 1 à 4, caractérisé en ce que des transformateurs (Ü) sont agencés à la sortie des transistors pour le découplage galvanique vis-à-vis de l'onduleur branché en aval et qui se trouve à la tension du réseau.

6. Agencement selon l'une quelconque des revendications 1 à 5, caractérisé en ce qu'à la sortie des transformateurs on dispose de signaux de commande préparés sous forme rectangulaire par ceux-ci pour l'onduleur branché en aval, à partir des demi-ondes de courant alternatif influencées dans les circuits en pont par le courant continu de commande (I_{G}) par sursaturation appropriée des transistors amplificateurs (NPN, PNP) et dimensionnement approprié des transformateurs (Ü) en ce qui concerne leur vitesse de montée en courant (di/dt).

7. Agencement selon l'une quelconque des revendications 1 à 6, caractérisé en ce que les courants alternatifs à commander dans les circuits en pont sont obtenus à partir d'un circuit étoile de trois petits transformateurs pour produire le décalage de phase de 30° nécessaire par rapport aux tensions du réseau de conducteurs.

8. Agencement selon l'une quelconque des revendications 1 à 7, caractérisé en ce que les courants alternatifs à commander dans les circuits en pont peuvent être réglés de +/-5° par rapport aux tensions des conducteurs du réseau, en plus de leur décalage fixe de transformation de 30°.

9. Agencement selon l'une quelconque des revendications 1 à 8, caractérisé en ce que par réglage d'une résistance de réglage (St - W) on obtient un rapport approprié de tension pour la tension alternative nécessaire pour les +/- 5° par rapport à la tension alternative proprement dite à commander, qui reste sans modification dans son amplitude.

10. Agencement selon l'une quelconque des revendications 1 à 9, caractérisé en ce que les trois transformateurs de commande branchés en étoile comportent un enroulement supplémentaire, qui sont branchés en triangle pour stabiliser la position angulaire des transformateurs de commande fonctionnant en circuit étoile.

11. Agencement selon l'une quelconque des revendications 1 à 10, caractérisé en ce que la tension continue de commande peut être réglée et est exempte d'ondes superposées au moyen de circuits filtres découplés (C1, C2), et en ce que pour la valeur de tension respectivement établie, elle se modifie additionnellement de façon linéaire en fonction des éventuelles fluctuations de tension du réseau.

12. Agencement selon l'une quelconque des revendications 1 à 11, caractérisé en ce qu'il est prévu additionnellement des diodes Zener (Z6, 2) de tension appropriée, branchées dans les branches des diodes des circuits en pont, afin d'éviter un angle de modulation trop important du courant alternatif commandé lorsque la tension continue est nulle.

13. Agencement selon l'une quelconque des revendications 1 à 12, caractérisé en ce que la tension continue de commande relie de façon galvanique tous les trois circuits en pont.

14. Agencement selon l'une quelconque des revendications 1 à 13, caractérisé en ce qu'au moyen d'un branchement approprié des transistors (NPN, PNP; BC107B, BC177B) au moyen de diodes Zener, et des enroulements primaires des transformateurs avec des combinaisons de résistances et de diodes (D5, R6), on élimine des pointes de tension qui se produisent éventuellement, et grâce à ceci la résistance des transistors vis-à-vis de la tension n'est pas excessivement sollicitée.

15. Agencement selon l'une quelconque des revendications 1 à 14, caractérisé en ce que des résistances de dérivation (R9, R10) agencées dans les circuits en pont inhibent les courants de fuite des diodes et/ou les tensions parasites induites.

16. Agencement selon l'une quelconque des revendications 1 à 15, caractérisé en ce que les sorties de transformateurs comportent des résistances de décharge (R7) pour les capacités d'entrée aux entrées de l'agencement à transistors de commutation (IGBT), et en ce qu'elles comportent une résistance de by-pass (R8) vers la diode de redressement de signaux (D6) en vue d'exploiter le signal négatif pour une décharge sûre et rapide des capacités d'entrée de cet agencement à transistors après la fin du signal.

17. Agencement selon l'une quelconque des revendications 1 à 16, caractérisé en ce qu'il est prévu une inductance d'amortissement (Dr) entre le réseau continu d'alimentation et chaque circuit à transistor (IGBT), en série par rapport à l'injection en retour vers le réseau triphasé, et en ce qu'il est prévu un circuit pour la décharge de l'énergie magnétique de l'inductance.
